# EUROPÄISCHE PATENTANMELDUNG

(11) **EP 0 783 011 A2**
(43) Veröffentlichungstag der Anmeldung: **09.07.1997**
(21) Anmeldenummer: 96120734.7
(22) Anmeldetag: 23.12.1996
(51) Int. Cl.: C08G 64/40, C08J 3/14

(54) **Verfahren zur Isolierung von teilkristallinem Polycarbonatpulver**

(30) Priorität: 05.01.1996 DE 19600271; 05.01.1996 DE 19600272
(71) Anmelder: BAYER AG, 51368 Leverkusen (DE)
(72) Erfinder: Wulff, Claus, Dr., 47800 Krefeld (DE); Zaby, Gottfried, Dr., 51375 Leverkusen (DE); Casper, Clemens, Dr., 47809 Krefeld (DE); Kohlgrüber, Klemens, Dr., 51515 Kürten (DE); Obermann, Hugo, Dr., 41540 Dormagen (DE); Kühling, Steffen, Dr., 40670 Meerbusch (DE)

(57) **Zusammenfassung**

Gegenstand der vorliegenden Anmeldung ist ein Verfahren zur Isolierung von teilkristallinem Polycarbonatpulver oder Oligocarbonatpulver aus ihren Lösungen, bei dem das organische Lösungsmittel einer Lösung von Polycarbonat in einem Wärmetauscher, gegebenenfalls mit Wasserdampfeinmischung, oder einem Verweilrohr mit Wasserdampfeinmischung verdampft und das pastöse Gemisch von aufkonzentrierter Lösung, Lösungsmitteldampf und gegebenenfalls Wasser in einem Abscheider getrennt wird. Dabei wird der Lösungsmitteldampf in einem dem Abscheider nachgeschalteten Wärmetauscher kondensiert. Die Verdampfung des Lösungsmittels in dem Wärmetauscher erfolgt durch indirekte Wärmezufuhr über die Wärmetauscherwände und kann durch Vorerhitzen der Polycarbonat- oder Oligocarbonatlösung in einem vorgeschalteten Wärmetauscher oder durch Zuspeisung von Wasserdampf oder beidem unterstützt werden.

## Beschreibung

Die Erfindung betrifft ein Verfahren zur Isolierung von teilkristallinem Polycarbonatpulver oder Oligocarbonatpulver aus Polycarbonat- oder Oligocarbonatlösungen, bei dem das organische Lösungsmittel einer Lösung von Polycarbonat oder Oligocarbonat in einem Wärmetauscher, gegebenenfalls mit Wasserdampfeinmischung, oder einem Verweilrohr mit Wasserdampfeinmischung verdampft und das pastöse Gemisch von aufkonzentrierter Lösung, Lösungsmitteldampf und gegebenenfalls Wasser in einem Abscheider getrennt wird. Dabei wird der Lösungsmitteldampf in einem dem Abscheider nachgeschalteten Wärmetauscher kondensiert. Die Verdampfung des Lösungsmittels in dem Wärmetauscher erfolgt durch indirekte Wärmezufuhr über die Wärmetauscherwände und kann durch Vorerhitzen der Polycarbonat- oder Oligocarbonatlösung in einem vorgeschalteten Wärmetauscher oder durch Zuspeisung von Wasserdampf oder beidem unterstützt werden. Der Abscheider kann bei Atmosphärendruck oder unter erhöhtem Druck betrieben werden.

Beim Betrieb unter atmosphärischem Druck dient der Abscheider zugleich als Kristaller. Das Polycarbonat bzw. Oligocarbonat fällt im Abscheider in Abhängigkeit vom Polycarbonattyp spontan als kristalliner Feststoff oder als Paste an, die beim Stehenlassen kristallisiert. Die Kristallisationszeit ist abhängig vom Polycarbonattyp, von der Molmasse, von der Lösungsmittelkonzentration, der Zugabe von Kristallisationskeimen und von der Temperatur.

Beim Betrieb des Abscheiders unter erhöhtem Druck fällt die aufkonzentrierte Lösung als fließfähige Paste an. Die Paste wird mittels geeigneter Pumpen aus dem ersten Abscheider zu einem zweiten Abscheider gefördert und hier unter niedrigerem Druck entspannt. Zwischen den beiden Abscheidern kann die Paste durch Durchleiten durch einen Wärmetauscher erhitzt werden, um die Verdampfungsleistung bei der Entspannung zu steigern. Die stufenweise Entspannung hat den Vorteil, daß hier eine hohe Verdampfungsleistung mit geringer direkter Dampfeinspeisung erreicht wird. Dadurch wird z.B. weniger Wasserdampf in der eingedampften Polycarbonatlösung kondensiert und das Trocknen des nach dem Stehenlassen und Zerkleinern erhaltenen Pulvers kann mit geringerer Energiezufuhr erfolgen.

Die nach diesem Verfahren gewonnenen Polycarbonatpulver zeichnen sich durch Kristallinität und dadurch aus, daß das ihnen gegebenenfalls anhaftende Restlösemittel besser entfernt werden kann und durch eine hohe Schüttdichte sowie durch eine energetisch günstige und besonders wirtschaftliche Trocknungsfähigkeit.

Die nach dem Verfahren gewonnenen Oligocarbonatpulver zeichnen sich durch eine homogene Kristallinität und Korngröße und dadurch aus, daß das Restlösemittel besser entfernt werden kann. Sie zeichnen sich ferner durch eine hohe Schüttdichte sowie durch eine energetisch günstige und besonders wirtschaftliche Trocknungsfähigkeit und durch eine besonders gute Polykondensationsfähigkeit in der festen Phase aus. Unter guter Polykondensationsfähigkeit wird die Erhöhung des Molekulargewichtes, gemessen als Differenz der Lösungsviskosität beim Tempern im Inertgasstrom, verstanden, wobei hochviskose Partikel mit enger Molmassenverteilung erhalten werden.

Die Isolierung von Polycarbonaten aus ihren Lösungen mit Hilfe von Wasserdampf ist an sich bekannt.

So wird in dem US-P 3 508 339 die Verwendung einer speziellen Düse in Kombination mit einer Mischkammer, in der Polycarbonatlösung und Dampf vereinigt werden und einem sich anschließenden Rohr mit konstantem Durchmesser, in dem das Lösungsmittel abgetrocknet wird, beschrieben. Die Patentschrift US-P 4 212 967 beschreibt die Kombination einer Düse vom De Laval-Typ mit einem beheizten Rohr, das sich in seinem Durchmesser von der Düse beginnend vergrößert.

Die Patentschrift US-P 4 568 418 beschreibt die Kombination einer Düse mit anschließendem Agglomerationsrohr, wobei das Rohr durch einen konstanten Durchmesser und mindestens sechs halbkreisförmige Schleifen charakterisiert ist. Die nach diesen Verfahren gewonnenen Polycarbonat-Agglomerate haben jedoch eine niedrige Schüttdichte. Außerdem erfordern diese Verfahren einen hohen Dampfeinsatz, was die Wirtschaftlichkeit verschlechtert.

Die europäische Offenlegungsschrift EP 0 616 002 A1 beschreibt ein Verfahren zur Herstellung von Polycarbonat-Pulver hoher Schüttdichte aus Methylenchloridlösungen durch Vereinigung von Wasserdampf mit der Polycarbonatlösung in einer Düse, an die ein unbeheiztes Verweilrohr angeschlossen ist.

Durch diese bekannten Verfahren werden Polycarbonatpartikel gewonnen, die vom organischen Lösungsmittel weitgehend befreit sind, aber einen Wassergehalt von ca. 40 % aufweisen oder bei niedrigerem Wassergehalt, einen extrem hohen Dampfeinsatz beim Versprühen erfordern, was das Isolierverfahren unwirtschaftlich macht. Um zu sehr kleinen Restlösungsmittelgehalten zu gelangen, ist in jedem Fall noch eine Nachtrocknung erforderlich. Die hierzu erforderlichen Bedingungen, z.B. die notwendige Zeit und das von der Zeit direkt abhängige Apparatevolumen spielt für die technische Brauchbarkeit des Isolierungsverfahrens eine wichtige Rolle.

Die Polycarbonatpartikel, die nach den bisher bekannt gewordenen Verfahren gewonnen werden, haben eine noch nicht ganz befriedigende Nachtrockenbarkeit und höhere Wassergehalte, was zur Abtrocknung der Wasserfeuchte großvolumige Apparate mit langen Verweilzeiten und einen hohen Energieeinsatz erfordert. Einen höheren Wassergehalt haben insbesondere die nach der europäischen Offenlegung EP 0 616 002 A1 hergestellten Polycarbonatpulver. Das nach diesem Verfahren hergestellte Polycarbonatpulver hat zwar auch eine hohe Schüttdichte, es hat jedoch einen höheren Wassergehalt und erfordert deshalb ein aufwendigeres Trocknungsverfahren, weil hier die gesamte Energie zum Verdampfen des Lösungsmittels durch den in die Lösung eingemischten Wasserdampf aufgebracht wird. Der Wasserdampf kondensiert und muß vom Polycarbonat durch Trocknung entfernt werden. Neben dem höheren Wassergehalt erschwert auch die Nichtkristallinität des nach dem obigen, in der EP 06 16 002 A1 beschriebenen Verfahren, hergestellten Polycarbonat das Abtrocknen der Wasserfeuchte, weil dies wegen der niedrigeren Erweichungs- bzw. Klebetemperatur (ca. 150°C) der amorphen Polycarbonatpulver unterhalb dieser Temperatur erfolgen muß. Die Abtrocknung der Wasserfeuchte bei tieferen Temperaturen erfordert großvolumigere Apparate, eine lange Verweilzeit und höheren Energieverbrauch und ist deshalb weniger wirtschaftlich.

Die Isolierung von Polycarbonaten aus ihren Lösungen durch Abdampfen des Lösungsmittels zu kristallinem Feststoff ist an sich bekannt. In den deutschen Offenlegungsschriften DE 4 022 232 und DE 4 134 483 wird ein Verfahren zur Herstellung von teilkristallinem Polycarbonat durch Verdampfung des Lösemittels in einer Vorrichtung zur Durchmischung unter fortwährender oder schubweiser Ausschleusung von Granulat beschrieben, indem die Polycarbonatlösung auf vorgelegtes teilkristallines Polycarbonat aufgegeben und das Lösungsmittel verdampft wird. Dabei wird das Entstehen größerer Agglomerate von teilkristallinem Polycarbonat durch fortwährende Scherung und Umwälzung der Masse in einem speziellen dafür ausgelegten Apparat verhindert. Die Kristallisation wird dabei durch die Scherung induziert.

Diese Verfahren haben jedoch den Nachteil, daß für die Kristallisation und die Aufkonzentration der Lösungen aufwendige Apparate erforderlich sind, die die Wirtschaftlichkeit des Verfahrens wesentlich mindern. Außerdem werden nach diesen Verfahren nur ungleichmäßig geformte Partikel erhalten, die zudem in ihrer Kristallinität noch inhomogen sind und hohe Anteile an amorphen Polycarbonaten, vermischt mit teilkristallinen Polycarbonaten enthalten und deshalb eine klebrige Konsistenz an der Oberfläche aufweisen. Dadurch ist die Trockenbarkeit dieser Partikel verschlechtert.

Auch die Herstellung von kristallinem Oligocarbonatpulver ist grundsätzlich bekannt. So wird in der Offenlegungsschrift WO 90/07536 ein Verfahren beschrieben, bei dem aus Dichlormethanlösung eingedampftes Oligocarbonatpulver durch Aufschlämmen in Dichlormethan oder Aceton und Stehenlassen kristallisiert wird. Die bekannten Verfahren haben aber den Nachteil, daß die lösemittelhaltigen Kristallite eine nicht ganz befriedigende Nachtrockenbarkeit aufweisen und damit noch einen unerwünschten Lösemittelrestgehalt aufweisen. Außerdem sind die nach den bekannten Verfahren gewonnenen kristallinen Oligocarbonate in ihrer Kristallinität und ihrer Korngröße nicht so homogen wie die nach dem erfindungsgemäßen Verfahren hergestellten kristallinen Oligocarbonate. Dies trifft im besonderen Maß für die auch Dichlormethan kristallisierten Oligocarbonate zu.

Es wurde gefunden, daß die bei der Isolierung von thermoplastischen aromatischen Polycarbonaten oder Oligocarbonaten aus ihren Lösungen durch Eindampfen in einem Wärmetauscher oder in einem Verweilrohr nach dem neuen, erfindungsgemäßen Verfahren erhaltenen aufkonzentrierten Pasten spontan oder nach einer gewissen Verweilzeit ohne das Aufbringen von Scherkräften, wie bei den bisher bekannten Verfahren, einen kristallinen Feststoff ergeben, der sich mechanisch, z.B. durch Durchpressen durch Passiersiebe mit Maschenweiten von 1 bis 5 mm, vorzugsweise von 2 bis 3 mm, zu einem teilkristallinem Pulver zerkleinern läßt.

Gegenstand der Erfindung ist ein Verfahren zur Isolierung von aromatischem Polycarbonatpulver oder von aromatischem Oligocarbonat in Form von kristallinem Pulver aus Polycarbonatlösungen, das dadurch gekennzeichnet ist, daß die Polycarbonatlösung bzw Oligocarbonat mit einer PC- bzw. Oligocarbonat-Konzentration von 3 bis 30 Gew.-%, vorzugsweise von 15 bis 25 Gew.-%, in Lösungsmitteln, vorzugsweise organischen Lösungsmitteln, insbesondere Dichlormethan, in einem Wärmetauscher oder, nach Mischen mit Wasserdampf, in einem Verweilrohr oder, nach Mischen mit Wasserdampf, in einem Wärmetauscher zu einer konzentrierten Paste aus Polycarbonat bzw. aus Oligocarbonat mit einem Molekulargewicht, charakterisiert durch die Lösungsviskosität ηᵣₑₗ. von 1,00 bis 1,40, vorzugsweise von 1,15 bis 1,35 (Polycarbonat) oder von 1,08 bis 1,15 (Oligocarbonat), bei einer Konzentration von 5 bis 80 Gew.-% der konzentrierten Paste, bezogen auf Polycarbonat bzw. Oligocarbonat, vorzugsweise von 25 bis 60 Gew.-% und gegebenenfalls kondensiertem Wasser aufkonzentriert und durch anschließendes Verweilenlassen von 1 Minute bis zu 2 Stunden, insbesondere bis 1 Stunde, in einem Kristallisator in teilkristallines Pulver überführt wird. Die Kristallisationszeit wird insbesondere durch Hinzufügen von 0,1 bis 15 Gew.-%, insbesondere von 0,5 bis 10 Gew.-%, vorzugsweise 0,7 bis 2 Gew.-%, bezogen auf Polycarbonat oder Oligocarbonat, Kristallisationskeimen in Form von fein gemahlenem teilkristallinem Pulver (mit einer Korngröße von 0,1 bis 2 mm, vorzugsweise von 0,2 bis 0,8 mm Durchmesser) verkürzt, bzw. die Kristallinität, charakterisiert durch die Schmelzwärme, wird bei gleicher Kristallisationszeit erhöht.

Die Isolierung von thermoplastischen aromatischen Polycarbonaten oder Oligocarbonaten aus ihren Lösungen durch Eindampfen in einem Wärmetauscher oder einem Verweilrohr ist insbesondere auch mit sehr geringen Dampfmengen oder auch ohne Dampfzugabe, gegebenenfalls ohne Einbringen von Scherenergie oder Zufügen von Kristallisationskeimen, möglich. Die erhaltenen Polycarbonatpasten unterschiedlicher Konsistenz, nämlich pastös bis stichfest, je nach Polycarbonat-/Oligocarbonattyp ergeben ebenfalls spontan oder durch Verweilenlassen einen kristallinen Feststoff, der sich mechanisch, z.B. mittels Durchpressen durch Passiersiebe, zu einem Pulver zerkleinern läßt. Der mittlere Teilchendurchmesser des so erhaltenen Pulvers richtet sich z.B. nach der Maschenweite des Siebes.

Die Isolierung von thermoplastischen aromatischen Polycarbonaten bzw. von Oligocarbonaten aus ihren Lösungen durch Eindampfen in einem Wärmetauscher ist bevorzugt auch ohne Wasserdampfzusatz und ohne Aufbringen von Scherenergie oder Hinzufügen von Kristallisationskeimen möglich, wobei die erhaltenen Pasten unterschiedlicher Konsistenz, nämlich pastös bis stichfest, je nach Polycarbonat- bzw. Oligocarbonattyp ebenfalls spontan oder durch Verweilenlassen nach dem Eindampfen des Lösungsmittels einen kristallinen Feststoff ergeben, der sich auch bei dieser Verfahrensweise mechanisch, z.B. mittels Durchpressen durch Passiersiebe, einfach zu einem Pulver zerkleinern läßt.

Die nach dem erfindungsgemäßen Verfahren erhältlichen Pulver lassen sich nach Entfernung der Lösungsmittelfeuchte, z.B. durch Wasserdampfstrippung, durch Anwendung einer höheren Temperatur, insbesondere von größer als 150°C, beim Trocknungsverfahren besonders effektiv vom Restlösungsmittel befreien, haben einen Wassergehalt von insbesondere unter 42 Gew.-% und eine hohe Schüttdichte (insbesondere >0,3 g/cm³, bei Oligocarbonat insbesondere >0.35 g/cm³). Die erfindungsgemäß isolierten Polycarbonat- bzw. Oligocarbonatpulver lassen sich in einfachen Trocknern bei geringem Energieverbrauch besonders wirtschaftlich trocknen.

Aromatische Polycarbonate bzw. Oligocarbonate, die im Sinne des erfindungsgemäßen Verfahrens eingesetzt werden, sind alle aromatischen Homopolycarbonate, Copolycarbonate und Mischungen dieser Polycarbonate bzw. alle Homo-Oligocarbonate, die sich insbesondere von folgenden Diphenolen ableiten:

Hydrochinon, Resorcin, Dihydroxydiphenyl, Bis-(hydroxyphenyl)-alkane, Bis-(hydroxyphenyl)-cycloalkane, Bis-(hydroxyphenyl)-sulfide, -ether, -sulfoxide, -sulfone und α,α'Bis-(hydroxyphenyl)-diisopropylbenzole, sowie deren kernalkylierte und kernhalogenierte Verbindungen.

Geeignete Diphenole sind beispielsweise in den US-Patenten US 3 028 365, US 2 999 835, US 3 062 781, US 3 148 172 und US 4 982 014, in den deutschen Offenlegungsschriften DE 1 570 703 und DE 2 063 050, sowie in der Monographie "H. Schnell, Chemistry and Physics of Polycarbonates, Interscience Publishers, New York, 1964" beschrieben.

Bevorzugte Diphenole sind
4,4'-Dihydroxydiphenyl,
2,2-Bis-(4-hydroxyphenyl)-propan,
2,4-Bis-(4-hydroxyphenyl)-2-methylbutan,
1,1 -Bis-(4-hydroxyphenyl)-cyclohexan,
α, α'-Bis-(4-hydroxyphenyl)-p-diisopropylbenzol,
α,α'-Bis-(4-hydroxyphenyl)-m-diisopropylbenzol,
2,2-Bis-(3-methyl-4-hydroxyphenyl)-propan,
2,2-Bis-(3-chlor-4-hydroxyphenyl)-propan,
Bis-(3,5-dimethyl-4-hydroxyphenyl)-methan,
2,2-Bis-(3,5-dimethyl-4-hydroxyphenyl)-propan,
Bis-(3,5-dimethyl-4-hydroxyphenyl)-sulfon,
2,4-Bis-(3,5-dimethyl-4-hydroxyphenyl)-2-methylbutan,
1,1-Bis-(3,5-dimethyl-4-hydroxyphenyl)-cyclohexan,
α, α'-Bis-(3,5-dimethyl-4-hydroxyphenyl)-p-diisopropylbenzol,
1,1-Bis-(4-hydroxyphenyl)-3,3,5-trimethylcyclohexan,
1,1-Bis-(4-hydroxyphenyl)-3-methylcyclohexan,
1,1-Bis-(4-hydroxyphenyl)-3,3-dimethylcylohexan,
1,1-Bis-(4-hydroxyphenyl)-4-methylcyclohexan,
2,2-Bis-(3,5-dichlor-4-hydroxyphenyl)-propan,
2,2-Bis-(3,5-dibrom-4-hydroxyphenyl)-propan,
1,1-Bis-(4-hydroxyphenyl)-1-phenyl-ethan,
2,2-Bis-(3,5-dimethyl-4-hydroxyphenyl)-2-phenyl-ethan,
2,2-Bis-(4-hydroxyphenyl)-2,2-diphenyl-ethan,
9,9-Bis-(4-hydroxyphenyl)-fluoren,
9,9-Bis-(3,5-dimethyl-4-hydroxyphenyl)-fluoren.

Besonders bevorzugte Diphenole sind z.B.:
2,2-Bis-(4-hydroxyphenyl)-propan,
2,2-Bis-(3,5-dimethyl-4-hydroxyphenyl)-propan,
1,1-Bis-(4-hydroxyphenyl)-cyclohexan,
1,1-Bis-(4-hydroxyphenyl)-1-phenyl-ethan,
1,1 -Bis-(4-hydroxyphenyl)-3,3,5-trimethylcyclohexan,
1,1 -Bis-(4-hydroxyphenyl)-3-methylcyclohexan,
1,1-Bis-(4-hydroxyphenyl)-4-methylcyclohexan,
9,9-Bis-(3,5-dimethyl-4-hydroxyphenyl)-fluoren.

Insbesondere sind 2,2-Bis-(4-hydroxyphenyl)-propan, 1,1-Bis-(4-hydroxyphenyl)-3,3,5-trimethylcyclohexan und 1,1-Bis-(4-hydroxy-phenyl)-1-phenyl-ethan bevorzugt.

Es können auch beliebige Mischungen der vorgenannten Diphenole zur Herstellung der Polycarbonate bzw. Oligocarbonate verwendet werden sein.

Zwecks Verbesserung des Fließverhaltens können auch geringe Mengen, vorzugsweise Mengen zwischen 0,05 und 2,0 Mol-% (bezogen auf Mole an eingesetzten Diphenolen), an tri- oder mehr als trifunktionellen Verbindungen, insbesondere solchen mit drei oder mehr als drei phenolischen Hydroxylgruppen in bekannter Weise bei der Synthese der Polycarbonate mitverwendet. Einige der verwendbaren Verbindungen sind beispielsweise:
1,3,5-Tris-(4-hydroxyphenyl)-benzol,
1,3,5-Tris-(4-(4-hydroxyphenylisopropyl)-phenyl)-benzol,
1,1,1-Tris-(4-hydroxyphenyl)-ethan,
2,6-Bis-(2-hydroxy-5'-methyl-benzyl)-4-methylbenzol,
2-(4-Hydroxyphenyl)-2-(2,4-dihydroxyphenyl)-propan,
Hexakis-(4-(4-hydroxyphenylisopropyl)-phenyl)-ortho-terephthalsäureester,
Tetrakis-(4-hydroxyphenyl)-methan,
1,4-Bis-((4',4''-dihydroxytriphenyl)-methyl)-benzol,
3,3-Bis-(4-hydroxyphenyl)-2-oxo-2,3-dihydroindol,
3,3-Bis-(4-hydroxy-3-methyl-phenyl)-2-oxo-2,3-dihydroindol.

Ferner geeignet sind die diesen Verbindungen entsprechenden Chlorkohlensäureester, sowie die Säuren oder bevorzugt die Säurechloride von mehr als 2-basigen aliphatischen oder aromatischen Carbonsäuren, also beispielsweise

2,4-Dihydroxybenzoesäure, bzw. 2,4-Dihydroxybenzoesäuredichlorid, Trimesinsäure, bzw. Trimesinsauretrichlorid, Trimellithsäure, bzw. Trimellithsäuretrichlorid, Cyanursäuretrichlorid.

Die Herstellung der erfindungsgemäßen Polycarbonate bzw. Oligocarbonate oder Gemische kann im wesentlichen nach folgenden bekannten Methoden (vgl. H. Schnell, "Chemistry and Physics of Polycarbonates", Polymer Review, Vol IX, Seite 27 ff., Interscience Publishers, New York, 1964) erfolgen:
1. Nach dem Schmelzeumesterungsverfahren:
2. Nach dem Lösungsverfahren in disperser Phase, dem sogenannten "Zweiphasengrenzflächenverfahren".

Neben oder anstelle der Diphenole können auch deren Chlorkohlensäureester oder Bischlorkohlensäureester oder beide eingesetzt oder während der Synthese der Polycarbonate zudosiert sein.

Geeignete Lösungsmittel im Sinne der Erfindung sind beispielsweise Dichlormethan, Monochlorbenzol, Toluol, Tetrahydrofuran oder 1,3-Dioxolan sowie Mischungen der genannten Lösungsmittel

Die Herstellung einer Polycarbonatlösung läßt sich beispielhaft wie folgt beschreiben:

In einer geeigneten Apparatur werden pro Stunde 61,2 kg einer Lösung aus 48,75 kg 2,2-Bis-(4-hydroxyphenyl)-propan, 237 kg Wasser, 39,4 kg 45 %ige Natronlauge, 50 g Natriumborhydrid und 750 g p-tert.-Butylphenol mit 4,75 kg Phosgen in 90 kg Methylenchlorid unter Zusatz von 3 kg 45 %iger Natronlauge kontinuierlich phosgeniert.

Nach Zugabe von 40 g/Stunde Triethylamin und 0,75 kg/Stunde 45 %iger Natronlauge erhält man nach einer mittleren Verweilzeit von einer halben Stunde ein Polycarbonat der rel. Viskosität 1,303.

Nach dem Abtrennen der wäßrigen Phase wird die organische Polycarbonatlösung zur weiteren Verarbeitung nach entsprechender Verdünnung bzw. Konzentrierung eingesetzt.

Die Herstellung einer Oligocarbonatlösung läßt sich beispielhaft wie folgt beschreiben:

In einem Reaktor werden 15 kg 2,2-Bis-(4-hydroxyphenyl)-propan und 168 g Phenol in einer Mischung aus 88 kg Wasser und 14,2 kg 50 gew.-%iger Natronlauge aufgelöst. Zu der Lösung wird 85 kg Dichlormethan zugegeben und unter starkem Rühren über ein Tauchrohr 6,4 kg Phosgen eingeleitet. Nach ca. einstündigem Rühren fügt man der Mischung 13 g Triethylamin zu und läßt die Mischung unter starkem Rühren eine weitere Stunde reagieren. Danach werden die Phasen getrennt und die organische Phase nacheinander mit verdünnter Natronlauge, Wasser, verdünnter Salzsäure und Wasser mehrmals extrahiert. Die erhaltene Lösung wird zur weiteren Verarbeitung eingesetzt.

Die im erfindungsgemäßen Verfahren einzusetzende Lösung von aromatischem Polycarbonat oder Oligocarbonat in organischem Lösungsmittel weist eine Konzentration von 3 Gew.-% bis 30 Gew.-%, vorzugsweise von 5 Gew.-% bis 20 Gew.-% auf.

Die bevorzugte Zugabe der Kristallisationskeime erfolgt in Form von kristallinem PC-Pulver, das durch das erfindungsgemäße Verfahren gewonnen wurde. Die Menge an Kristallisationskeimen, die der Beschleunigung der Kristallisation und der Verkürzung der Kristallisationszeit und damit zur Umwandlung der Paste in einen stichfesten Feststoff dienen, beträgt 0,1 Gew.-% bis 15 Gew.-% bezogen auf den Polycarbonatanteil in der Polycarbonatlösung, vorzugsweise von 0,5 Gew.-% bis 10 Gew.-%.

Als Lösungsmittel sind alle diejenigen geeignet, die die Polycarbonate bzw. Oligocarbonate ausreichend (z.B. zu mindestens 5 Gew.-%) lösen und die einen Siedepunkt von nicht mehr als 150°C aufweisen. Bevorzugte Lösungsmittel sind Dichlormethan, Monochlorbenzol, Toluol, Tetrahydrofuran oder 1,3-Dioxolan sowie Mischungen der genannten Lösungsmittel. Besonders bevorzugt ist Dichlormethan .

Der gegebenenfalls erfindungsgemäß verwendete Wasserdampf hat eine Temperatur von 100°C bis 300°C, vorzugsweise von 140°C bis 250°C.

Das Verhältnis der Gewichte von Lösungsmittel der Polycarbonatlösung zu Wasserdampf beträgt von 7:1 bis 1000:1. Das Verfahren kann auch gänzlich ohne Einspeisung von Wasserdampf betrieben werden. Vorzugsweise beträgt das Verhältnis von Lösungsmittel der Polycarbonatlösung zu Wasserdampf 12:1 bis 200:1.

Die Temperatur des Wärmetauschers beträgt insbesondere 50°C bis 300°C, vorzugsweise von 150°C bis 250°C. Die Polycarbonatlösung hat zu Beginn des Verfahrens bevorzugt eine Temperatur von 10°C bis 200°C, vorzugsweise 60°C bis 120°C.

Weitere bevorzugte Ausführungen der Erfindung sind den Unteransprüchen zu entnehmen.

Eine geeignete Einheit für die Einmischung von Wasserdampf in die Polycarbonat- bzw. Oligocarbonatlösung ist z.B. ein T-förmiges Rohrstück oder eine Düse vom Ejektortyp, vorzugsweise eine Düse vom Ejektortyp. Die eventuelle Zugabe von Kristallisationskeimen zur Verkürzung der Kristallisationszeit erfolgt beispielsweise in den Dampfstrom oder in die Leitung der Polycarbonat- bzw. Oligocarbonatlösung ca. 20 mm bis 100 mm vor der Vereinigungsstelle mit dem Wasserdampf bzw. bei der Verfahrensweise ohne Verwendung von Wasserdampf ca. 20 mm bis 100 mm vor der Einspeisung der Polycarbonat- bzw. Oligocarbonatlösung in den Wärmetauscher.

Der Wärmetauscher kann ein rohrförmiger Wärmetauscher sein bestehend aus einem inneren Rohr, mit einem Mantelrohr, bei dem das innere Rohr ein Verhältnis von Länge zu Durchmesser von 5000 bis 100, vorzugsweise 1000 bis 250 und ganz besonders bevorzugt 900 bis 500 hat oder ein beliebiger anderer Wärmetauscher mit der zum rohrförmigen Wärmetauscher äquivalenten Wärmeaustauschfläche.

Der Abscheider ist bei der Verfahrensweise unter Normaldruck beispielsweise ein zylindrischer Behälter mit einem Volumen, das den Durchsatz an Polycarbonat-/Oligocarbonatpaste bei hälftiger Füllung von ca. 2 Stunden aufnehmen kann. Der Abscheider für die Verfahrensweise unter erhöhtem Druck ist ein zylindrischer Behälter mit einem unteren konischen Auslaufteil mit einem dem vorstehend beschriebenen Abscheider vergleichbarem Volumen.

Die nach dem erfindungsgemäßen Verfahren isolierten Oligocarbonate sind wegen ihres geringen Restlösemittelgehaltes (d.h. einem Gehalt <2 ppm (Nachweisgrenze)) durch Einmischen in Polycarbonate oder ABS als Blendpartner zur Herstellung von Formkörpern geeignet. Die Verwendung dieser Formkörper aus Polycarbonat- oder ABS-Blends erfolgt in üblicher Weise, beispielsweise auf dem Gebiet der Elektronik, der Optik, im Fahrzeugbau und in der Beleuchtungsindustrie.

Die nach dem erfindungsgemäßen Verfahren isolierten Polycarbonate können zu Formkörpern verarbeitet werden, indem man, beispielsweise die wie vorstehend isolierten Polycarbonate zu Granulat extrudiert und dieses Granulat, gegebenenfalls nach Zusatz von Additiven, Farbstoffen, Füllstoffen oder Glasfasern durch Spritzguß zu verschiedenen Artikeln in bekannter Weise verarbeitet.

Den isolierten Polycarbonaten können, für meist nicht transparente Anwendungen, noch andere Thermoplaste in üblichen Mengen, d.h. zwischen 10 bis 50 Gew.-%, bezogen auf das Polycarbonat, zugemischt werden.

Geeignete andere Thermoplaste sind beispielsweise gegebenenfalls aromatische Polyestercarbonate, Polycarbonate auf Basis anderer Bisphenole als die erfindungsgemäßen Polycarbonate, Polyalkylen-terephthalate, EPDM-Polymerisate, Polystyrol und Co- und Pfropfcopolymerisate, z.B. auf Basis von Styrol, Acrylnitril und Butadien wie insbesondere ABS.

Die Verwendung dieser Polycarbonatkörper erfolgt in üblicher Weise, beispielsweise auf dem Gebiet der Elektrotechnik, der Optik, im Fahrzeugbau und in der Beleuchtungsindustrie.

Die Erfindung wird anhand der Figuren nachstehend beispielhaft näher erläutert. In den Figuren zeigen:
- Fig. 1: ein Verfahrensschema zum erfindungsgemäßen Isolierverfahren,
- Fig. 2: eine Variante der Anordnung nach Fig. 1 mit zusätzlichem Abscheider 6 und Wärmetauscher 7,
- Fig. 3: eine Variante der Anordnung nach Fig. 1 mit Wasserdampfeinspeisung 11 anstelle des Wärmetauschers 2,
- Fig. 4: eine Variante der Anordnung nach Fig. 2 mit Wasserdampfeinspeisung 11 anstelle des Wärmetauschers 2.

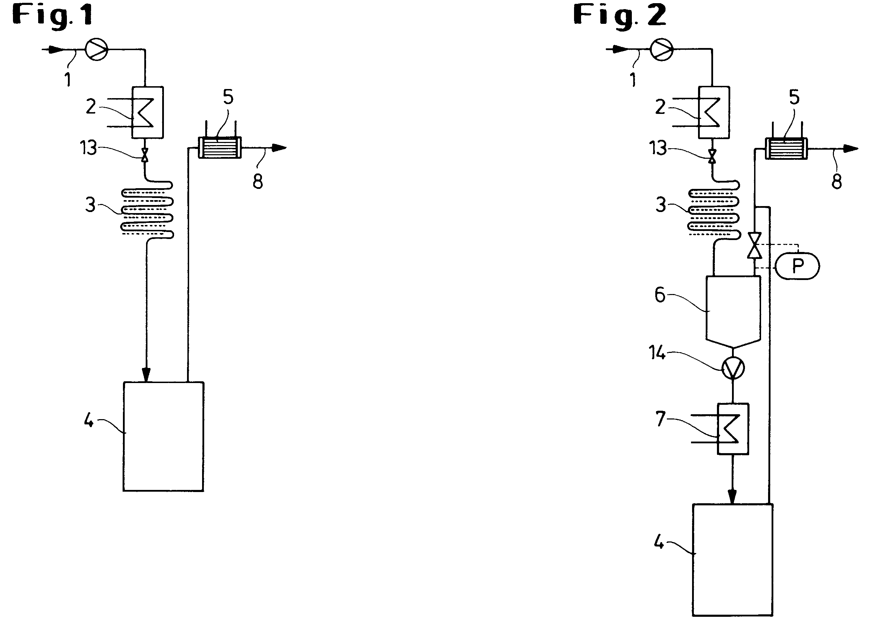

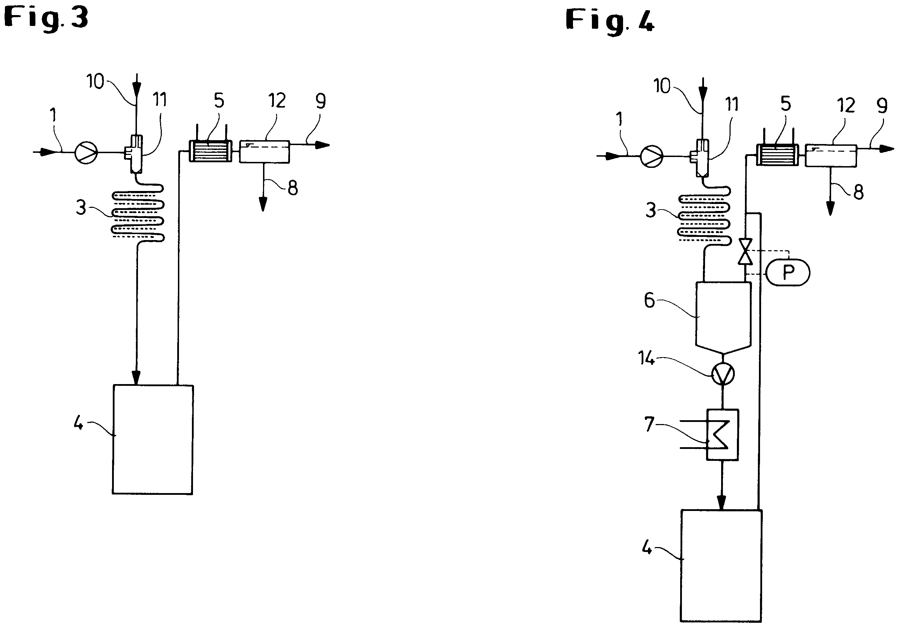

Die Lösung 1 des Polycarbonats oder des Oligocarbonats wird gemäß Fig. 1 über einen Wärmetauscher 2 temperiert und über ein Ventil 13 einem Verweilrohr 3 zugeführt, das beheizt werden kann. Die Lösung wird in einem Abscheider 4 entspannt und das Lösungsmittel 8 am Kondensator 5 abgeschieden und abgetrennt. Die Anordnung kann durch einen Zwischenabscheider 6 mit nachgeschaltetem Wärmetauscher ergänzt werden (siehe Fig. 2). Die Zumischung von Wasserdampf 10 erfolgt gegebenenfalls in einer Düse 11, die den Wärmetauscher 2 ersetzt (siehe Fig. 3 bzw. Fig. 4).

### Beispiele

### Beispiel 1

25 kg Polycarbonat auf Basis Bisphenol A mit einem mittleren Molekulargewicht von M_{W}= 29800 werden in 142 kg Dichlormethan gelöst. Von dieser 15 gew.-%igen Polycarbonatlösung 1 werden 77 kg/h in einer Düse 11 mit 6 kg/h Wasserdampf 10 mit einer Temperatur von 195 °C und einem Druck von 14,5 bar gemischt (entsprechend Fig. 3). Diese Mischung wird durch ein Rohr 3 mit einem inneren Durchmesser von 6 mm, einer Wandstärke von 1 mm und einer Länge von 6 m zu einem zylindrischen Abscheider 4 mit einem Volumen von 60 l geleitet. Das Rohr 3 ist mit einem Mantelrohr umgeben, das einen äußeren Durchmesser von 18 mm und eine Wandstärke von 1,5 mm aufweist. Die Temperatur der Polycarbonatlösung 1 in Methylenchlorid betrug am Eingang 23°C, die Temperatur der Mantelheizung 165°C.

In dem Abscheider 4 wird die pastöse fließfähige aufkonzentrierte Polycarbonatlösung von den Lösungsmitteldämpfen getrennt. Die Lösungsmitteldämpfe werden zu einem Wärmetauscher 5 geleitet und kondensiert. Ca. 1 Stunde nach Beendigung des Versuches wurde eine Probe aus dem Abscheider 4 entnommen, die die in der Tabelle 1 beschriebenen Eigenschaften zeigte.

### Beispiel 2

78 kg/h der unter Beispiel 1 beschriebenen 15 gew.-%igen Polycarbonatlösung 1 in Methylenchlorid wird mit 2,5 kg/h Wasserdampf 10 mit einem Druck von 14,5 bar und einer Temperatur von 195°C, wie unter Beispiel 1 beschrieben, gemischt und durch ein beheiztes Rohr 3, wie unter Beispiel 1 beschrieben, zu einem Abscheider 4 geleitet. Statt der unter Beispiel 1 beschriebenen Düse 11 wird hier ein T-förmiges Rohr mit einem inneren Durchmesser von 1 mm zum Mischen verwendet. Die Temperatur der Mantelbeheizung betrug hier 195°C. Die Temperatur der Polycarbonatlösung 1 in Methylenchlorid betrug 23°C. Die Eigenschaften der nach ca. 1 Stunde aus dem Abscheider entnommenen Probe sind in Tabelle 1 beschrieben.

### Beispiel 3

47 kg Polycarbonat auf Basis Bisphenol A mit einem mittleren Molekulargewicht von M_{W}= 29800 werden in 180 kg Dichlormethan gelöst. Anschließend wurde aus dieser Lösung 38 kg Dichlormethan wieder abgedampft. Von der so erhaltenen 25 gew.-%igen Polycarbonatlösung 1 werden 37 kg/h durch ein beheiztes Rohr 3, wie unter Beispiel 1 beschrieben, jedoch ohne Zumischung von Wasserdampf, mit einem inneren Durchmesser von 6 mm und einer Länge von 6 m zu einem zylindrischen Abscheider 4 mit einem Volumen von 60 l geleitet. Die Temperatur der Rohrmantelbeheizung betrug hier 195°C. Die Temperatur der Polycarbonatlösung 1 in Methylenchlorid betrug am Eingang 100°C. Die Eigenschaften der nach ca. 1 Stunde aus dem Abscheider 4 entnommenen Probe sind in Tabelle 1 beschrieben.

### Beispiel 4

31,2 kg eines oligomeren Carbonats auf Basis Bisphenol A mit einem mittleren Molekulargewicht von M_{W}= 11400 werden in 142 kg Dichlormethan gelöst. Von dieser 18 gew.-%igen Oligocarbonatlösung werden 59 kg/h mit 6 kg/h Wasserdampf 10 mit einem Druck von 14,5 bar und einer Temperatur von 195°C, wie unter Beispiel 1 beschrieben, in einer Düse 11 gemischt und durch ein beheizbares Rohr 3 mit einem inneren Durchmesser von 6 mm und einer Länge von 4,5 m, wie unter Beispiel 1 beschrieben, zu einem zylindrischen Abscheider 4 mit einem Volumen von 60 l geleitet. Das Mantelrohr blieb bei diesem Beispiel unbeheizt. Die Temperatur der Oligocarbonatlösung in Methylenchlorid betrug 25°C. Die Eigenschaften der nach ca. 1 Stunde aus dem Abscheider 4 entnommenen Probe sind in Tabelle 1 beschrieben.

### Beispiel 5

60 kg/h der unter Beispiel 4 beschriebenen 18 gew.-%igen Oligocarbonatlösung werden mit 4 kg/h Wasserdampf 10 mit einem Druck von 14,5 bar und einer Temperatur von 195°C, wie unter Beispiel 1 beschrieben, in einer Düse 11 gemischt und durch ein beheizbares Rohr 3 mit einem inneren Durchmesser von 6 mm und einer Länge von 4,5 m, wie unter Beispiel 1 beschrieben, zu einem zylindrischen Abscheider 4 mit einem Volumen von 60 l geleitet. Das Mantelrohr blieb bei diesem Beispiel unbeheizt. Die Temperatur der Oligocarbonatlösung in Methylenchlorid betrug 25°C. Die Eigenschaften der nach ca 1 Stunde aus dem Abscheider entnommenen Probe sind in Tabelle 1 beschrieben.

### Beispiel 6

60 kg/h der unter Beispiel 4 beschriebenen 18 gew.-%igen Oligocarbonatlösung werden mit 3 kg/h Wasserdampf mit einem Druck von 14,5 bar und einer Temperatur von 195°C, wie unter Beispiel 1 beschrieben, in einer Düse gemischt und durch ein beheizbares Rohr 3 mit einem inneren Durchmesser von 6 mm und einer Länge von 4,5 m, wie unter Beispiel 1 beschrieben, zu einem zylindrischen Abscheider mit einem Volumen von 60 l geleitet. Das Mantelrohr wurde bei diesem Beispiel so auf einer Temperatur von 100°C geheizt. Die Temperatur der Oligocarbonatlösung in Methylenchlorid betrug 25 °C. Die Eigenschaften der nach ca. 1 Stunde aus dem Abscheider entnommenen Probe sind in Tabelle 1 beschrieben.

### Beispiel 7

37,5 kg/h der unter Beispiel 3 beschriebenen 25 gew.-%igen Polycarbonatlösung in Methylenchlorid werden mit 2 kg/h Wasserdampf 10 mit einem Druck von 14,5 bar und einer Temperatur von 195 °C, wie unter Beispiel 1 beschrieben, in einer Düse 11 gemischt und durch ein beheizbares Rohr 3 mit einem inneren Durchmesser von 6 mm und einer Länge von 5,25 m, wie unter Beispiel 1 beschrieben, zu einem Abscheider 6 geleitet (siehe Fig. 4). Die Temperatur der Rohrbeheizung betrug hier 165°C. Die Temperatur der Polycarbonatlösung 1 in Methylenchlorid betrug 25°C. Der Abscheider hat ein Volumen 40 l und ist am konischen Auslauf mit einer Schmelzepumpe versehen. Der Druck im Abscheider 6 wurde bei 5 bar gehalten. Die Lösungsmitteldämpfe wurden über einen Kühler 5 abgeleitet und kondensiert. Die im Abscheider 4 befindliche Schmelze wurde mittels der Schmelzepumpe zu einem Gefäß 4 gefördert, in dem die Entspannung auf 1 bar erfolgte und dabei weiteres Methylenchlorid 8 verdampfte. Aus diesem Gefäß wurden die Lösungsmitteldämpfe über eine Rohrleitung zu einem Kühler 3 geleitet und kondensiert. Die Eigenschaften der nach ca. 1 Stunde aus dem Gefäß entnommenen Probe sind in Tabelle 1 beschrieben.

### Beispiel 8

77 kg/h der unter Beispiel 1 beschriebenen 15 gew.-%igen Polycarbonatlösung in Methylenchlorid wird mit 2,5 kg/h Wasserdampf mit einem Druck von 14,5 bar und einer Temperatur von 195°C wie unter Beispiel 1 beschrieben in einer Düse 11 gemischt und durch ein beheiztes Rohr, wie unter Beispiel 1 beschrieben, zu einem Abscheider 4 geleitet. In diesem Beispiel werden 0,1 kg/h des nach Beispiel 1 erhaltenen kristallinen Polycarbonatpulvers fein gemahlen (mittlere Korngröße ca. 0,3 mm) und über die in Fig. 3 gezeigte Düse 11 mit dem Wasserdampf 10 als Kristallisationskeime in das Rohr 3 eingespeist. Die Temperatur der Rohrbeheizung betrug hier 195°C. Die Temperatur der Polycarbonatlösung 1 in Methylenchlorid betrug 21°C. Die Eigenschaften der nach ca. 1 Stunde aus dem Abscheider 4 entnommenen Probe sind in Tabelle 1 beschrieben.

### Vergleichsbeispiel

61 kg/h der unter Beispiel 1 beschriebenen 15 %igen Polycarbonatlösung in Methylenchlorid werden mit 12,7 kg/h Wasserdampf mit einem Druck von 14,5 bar und einer Temperatur von 195°C, wie unter Beispiel 1 beschrieben, in einer Düse gemischt und durch ein beheizbares Rohr mit einem inneren Durchmesser von 6 mm und einer Länge von 5,9 m, wie unter Beispiel 1 beschrieben, zu einem Abscheider geleitet. Die ersten 4,5 m des Rohres hinter der Düse wurden nicht beheizt. Das letzte Teilstück von 1,5 m des Rohres wurde beheizt. Die Temperatur des Heizmediums betrug hier 195°C. Die Temperatur der Polycarbonatlösung in Methylenchlorid betrug 104°C. Als Abscheider wurde ein Zyklon mit einem Volumen von 40 l verwendet, der am konischen Auslauf mit einer Zellenradschleuse versehen ist. Der Druck im Abscheider betrug 1 bar. Die Lösungsmitteldämpfe wurden über einen Kühler abgeleitet und kondensiert. Im Abscheider erhielt man pulverförmige Agglomerate, die mittels der Zellenradschleuse in ein Gefäß gefördert wurden. Die Eigenschaften der nach ca. 1 Stunde aus dem Gefäß entnommenen Probe sind in Tabelle 1 beschrieben.

**Tabelle 1**

| | MC-Gehalt (Gew.-%) | Wassergehalt (Gew.-%) | MC-Restgehalt (ppm)* | Schüttdichte (g/cm³) | Schmelzwärme (J/g) | Schmelzpunkt (°C) |
|---|---|---|---|---|---|---|
| Beispiel 1 | 31,4 | 17,0 | <2 | 0,39 | 19,4 | 248 |
| Beispiel 2 | 46,5 | 10,5 | <2 | 0,37 | 17,5 | 252 |
| Beispiel 3 | 53,5 | - | <2 | 0,37 | 14,6 | 252 |
| Beispiel 4 | 8,0 | 41,0 | <2 | 0,37 | 17,8 | 221 |
| Beispiel 5 | 49,5 | 21,0 | <2 | 0,54 | 33,9 | 248 |
| Beispiel 6 | 38,5 | 18,0 | <2 | 0,56 | 32,4 | 248 |
| Beispiel 7 | 30,5 | 13,0 | <2 | 0,35 | 17,5 | 252 |
| Beispiel 8 | 45,0 | 10,0 | <2 | 0,45 | 29,3 | 260 |
| Vergleichs beispiel | 7,6 | 29,1 | 19 | 0,15 | amorph | - |

| | | | | | | |
|---|---|---|---|---|---|---|
| * nach Trocknung | | | | | | |

### Beispiel 9

47 kg eines oligomeren Carbonats auf Basis Bisphenol A mit einem mittleren Molekulargewicht von M_{W}= 11400 werden in 180 kg Dichlormethan gelöst. Anschließend wurde aus dieser Lösung 38 kg Dichlormethan wieder abgedampft. Von der so erhaltenen 25 %igen Oligocarbonatlösung 1 werden 37 kg/h entsprechend Fig. 1 durch einen Wärmetauscher 2 und durch ein Rohr 3 mit einem inneren Durchmesser von 6 mm, einer Wandstärke von 1 mm und einer Länge von 6 m zu einem zylindrischen Abscheider 4 mit einem Volumen von 60 l geleitet. Das Rohr 3 ist mit einem Mantelrohr umgeben, das einen äußeren Durchmesser von 18 mm und eine Wandstärke von 1,5 mm aufweist. Die Temperatur der Oligocarbonatlösung in Methylenchlorid betrug am Eingang 38°C, die Temperatur der Mantelrohrbeheizung 220°C. Das Lösungsmittel wurde im Kondensor 5 abgeschieden und entfernt. Die Eigenschaften der nach ca. 1 Stunde aus dem Abscheider 4 entnommenen Probe sind in Tabelle 2 beschrieben.

### Beispiel 10

31,2 kg eines oligomeren Carbonats auf Basis Bisphenol A mit einem mittleren Molekulargewicht von M_{W}= 11400 werden in 142 kg Dichlormethan gelöst. Von dieser 18 %igen Oligocarbonatlösung werden 59 kg/h in einer Anordnung entsprechend Fig. 3 mit 6 kg/h Wasserdampf mit einem Druck von 14,5 bar und einer Temperatur von 195°C in einer Düse 11 gemischt und durch ein beheizbares Rohr 3 mit einem inneren Durchmesser von 6 mm und einer Lange von 4,5 m, wie unter Beispiel 9 beschrieben, zu einem zylindrischen Abscheider 4 mit einem Volumen von 60 l geleitet. Das Mantelrohr blieb bei diesem Beispiel unbeheizt. Die Temperatur der Oligocarbonatlösung in Methylenchlorid betrug 25°C. Lösungsmittel 8 und Wasser 9 wurden kondensiert 5 und voneinander separiert 12. Die Eigenschaften der nach ca. 1 Stunde aus dem Abscheider 4 entnommenen Probe sind in Tabelle 2 beschrieben.

### Beispiel 11

60 kg/h der unter Beispiel 10 beschriebenen 18 %igen Oligocarbonatlösung werden mit 4 kg/h Wasserdampf mit einem Druck von 14,5 bar und einer Temperatur von 195°C, wie unter Beispiel 10 beschrieben, in einer Düse 11 gemischt und durch ein beheizbares Rohr 3 mit einem inneren Durchmesser von 6 mm und einer Lange von 4,5 m, wie unter Beispiel 1 beschrieben, zu einem zylindrischen Abscheider 4 mit einem Volumen von 60 l geleitet. Das Mantelrohr blieb bei diesem Beispiel unbeheizt. Die Temperatur der Oligocarbonatlösung in Methylenchlorid betrug 25°C. Die Eigenschaften der nach ca. 1 Stunde aus dem Abscheider entnommenen Probe sind in Tabelle 2 beschrieben.

### Beispiel 12

60 kg/h der unter Beispiel 10 beschriebenen 18 %igen Oligocarbonatlösung werden mit 3 kg/h Wasserdampf mit einem Druck von 14,5 bar und einer Temperatur von 195°C, wie unter Beispiel 10 beschrieben, in einer Düse 11 gemischt und durch ein beheizbares Rohr 3 mit einem inneren Durchmesser von 6 mm und einer Länge von 4,5 m, wie unter Beispiel 9 beschrieben, zu einem zylindrischen Abscheider 4 mit einem Volumen von 60 l geleitet Das Mantelrohr wurde bei diesem Beispiel mit Wasserdampf bei einer Temperatur von 100°C beheizt. Die Temperatur der Oligocarbonatlösung in Methylenchlorid betrug 25°C. Die Eigenschaften der nach ca. 1 Stunde aus dem Abscheider entnommenen Probe sind in Tabelle 2 beschrieben.

### Vergleichsbeispiel 2

0,5 kg eines pulverisierten oligomeren Carbonats auf Basis Bisphenol A mit einem mittleren Molekulargewicht von M_{W}= 11400 werden mit 0,15 kg Dichlormethan verrührt und 24 h bei Raumtemperatur stehengelassen. Danach wird die Mischung bei 180°C im Vakuumschrank getrocknet und fein gemahlen. Die Eigenschaften des Pulvers sind in Tabelle 2 beschrieben.

**Tabelle 2**

| | MC-Gehalt (Gew.-%) | Wassergehalt (Gew.-%) | MC-Restgehalt (ppm)¹⁾ | Schüttdichte (g/cm³) | Schmelz wärme (J/g) | Schmelzpunkt (°C) | Lösungsviskosität ηrel.²⁾ |
|---|---|---|---|---|---|---|---|
| Beispiel 9 | 53,5 | - | <2 | 0,56 | 33,8 | 249 | 1,52 |
| Beispiel 10 | 8,0 | 41,0 | <2 | 0,37 | 17,8 | 221 | 1,48 |
| Beispiel 11 | 49,5 | 21,0 | <2 | 0,54 | 33,9 | 248 | 1,29 |
| Beispiel 2 | 38,5 | 18,0 | <2 | 0,56 | 32,4 | 248 | 1,53 |
| Vergleichsbeispiel 2 | - | - | 9 | 0,60 | 34,0 | 249 | nicht meßbar³⁾ |

| | | | | | | | |
|---|---|---|---|---|---|---|---|
| 1) nach Trocknung, 3 h bei 180°C | | | | | | | |
| 2) nach Nachkondensation in fester Phase, 5 h bei 220°C im Stickstoffstrom | | | | | | | |
| 3) Reaktionsprodukt ist nicht vollständig löslich in Dichlormethan | | | | | | | |

## Patentansprüche

1. Verfahren zur Isolierung von Polycarbonatpulver oder Oligocarbonatpulver aus Lösungen aromatischer Polycarbonate oder Oligocarbonat, dadurch gekennzeichnet, daß die Polycarbonat- bzw. Oligocarbonatlösung mit einer Polycarbonat- oder Oligocarbonatkonzentration von 3 bis 30 Gew.-% in einem Wärmetauscher (2) oder nach Mischen mit Wasserdampf (10) in einem Verweilrohr (3) oder nach Mischen mit Wasserdampf in einem Wärmetauscher (3) zu einer konzentrierten Paste aus Polycarbonat oder Oligocarbonat mit einem Molekulargewicht, charakterisiert durch die Lösungsviskosität ηrel. von 1,00 bis 1,40 bei einer Konzentration der konzentrierten Paste von 5 bis 80 Gew.-%, bezogen auf das Polycarbonat oder Oligocarbonat, und gegebenenfalls kondensiertes Wasser aufkonzentriert, wobei das Gewichtsverhältnis von Lösungsmittel der Polycarbonat- bzw. Oligocarbonatlösung zu gegebenenfalls verwendetem Wasser von 7:1 bis 1000:1 beträgt, und durch anschließendes Verweilenlassen von 1 Minute bis zu 2 Stunden in einem Kristallisator (4) in kristallines Pulver überführt wird.

2. Verfahren gemäß Anspruch 1, dadurch gekennzeichnet, daß die Polycarbonat- oder Oligocarbonatlösung in einem Zwischenabscheider (6) bei einem Druck von 1 bis 10 bar aufkonzentriert und nachfolgend im Kristallisator (4) auf Normaldruck entspannt wird.

3. Verfahren gemäß Anspruch 2, dadurch gekennzeichnet, daß die aufkonzentrierte Polycarbonat- oder Oligocarbonatlösung vor der nachfolgenden Entspannung auf Normaldruck mittels Durchleiten durch einen Wärmetauscher (7) auf eine Temperatur von 60 bis 220°C erhitzt wird.

4. Verfahren nach einem der Ansprüche 1 bis 3, dadurch gekennzeichnet, daß eine 15 bis 25 gew.-%ige Polycarbonat- oder Oligocarbonatlösung eingesetzt wird.

5. Verfahren gemäß den Ansprüchen 1 bis 4, dadurch gekennzeichnet, daß als Lösungsmittel für das Polycarbonat oder Oligocarbonat organische Lösungsmittel, insbesondere Dichlormethan, Monochlorbenzol, Toluol, Tetrahydrofuran oder 1,3-Dioxolan, bevorzugt Dichlormethan, eingesetzt werden.

6. Verfahren gemäß den Ansprüchen 1 bis 5, dadurch gekennzeichnet, daß Polycarbonat mit einer relativen Viskosität von 1,15 bis 1,35 eingesetzt wird.

7. Verfahren gemäß den Ansprüchen 1 bis 5, dadurch gekennzeichnet, daß Oligocarbonat mit einer relativen Viskosität von 1,08 bis 1,15 eingesetzt wird.

8. Verfahren nach den Ansprüchen 1 bis 7, dadurch gekennzeichnet, daß im Kristallisator (4) eine Pastenkonzentration von 25 bis 60 Gew.-% eingestellt wird.

9. Verfahren gemäß den Ansprüchen 1 bis 8, dadurch gekennzeichnet, daß zur Verminderung der Kristallisationszeit der Polycarbonatlösung von 0,1 bis 15 Gew.-%, insbesondere von 0,5 bis 10 Gew.-% Kristallisationskeime in Form von teilkristallinem Polycarbonatpulver zugesetzt werden.

10. Verfahren gemäß den Ansprüchen 1 bis 9, dadurch gekennzeichnet, daß der Polycarbonatlösung vor dem Wärmetauscher oder Verweilrohr (3) Wasserdampf einer Temperatur von 100°C bis 300°C, insbesondere von 140°C bis 250°C, zugemischt wird.

11. Verfahren gemäß Anspruch 10, dadurch gekennzeichnet, daß das Verhältnis der Gewichte von Lösungsmittel der Polycarbonatlösung zu Wasserdampf von 12:1 bis 200:1 beträgt.

12. Verfahren gemäß den Ansprüchen 1 bis 11, dadurch gekennzeichnet, daß die Konzentrierung der Polycarbonatlösung in einem Verweilrohr (3) durchgeführt wird, bei dem das Verweilrohr (3) ein Verhältnis von Länge zu Innendurchmesser von 5000 bis 100, insbesondere von 1000 bis 250, besonders bevorzugt von 900 bis 500 aufweist.
